# FASCICULE DE BREVET EUROPEEN

(11) **EP 0 820 169 B1**
(45) Date de publication et mention de la délivrance du brevet: **01.12.2004**
(21) Numéro de dépôt: 97401620.6
(22) Date de dépôt: 07.07.1997
(51) Int. Cl.: H04L 9/32, H04L 9/08

(54) **Système de diversification d'informations dans un réseau de distribution de produits ou de services**
Datendiversifizierungssystem in einem Verteilnetz für Produkte oder Dienste
System for information diversification in a distribution network for products or services

(30) Priorité: 15.07.1996 FR 9608916
(43) Date de publication de la demande: 21.01.1998
(73) Titulaire: Axalto S.A., 92120 Montrouge (FR)
(72) Inventeur: Brahami, Lionel, 92120 Montrouge (FR); Dietrich, Christian, 94220 Charenton (FR); Ocquet, Nathalie,, 92130 Issy les Moulineaux (FR); Phan, Ly Thanh,, Austin, Texas, 78731 (US)
(74) Mandataire: Cassagne, Philippe M.J.

(56) Documents cités:
- WO-A-93/19549
- WO-A-95/20280
- US-A- 5 117 458

## Description

La présente invention concerne un système de diversification d'informations transmises par un réseau vers des appareils délivrant des produits ou des services.

L'invention trouve une application particulièrement avantageuse dans le domaine des systèmes de transactions électroniques sécurisées, tels que les systèmes de paiement, les réseaux de téléphonie mobile, les réseaux informatiques, les systèmes de télévision à péage, etc.

Ces réseaux de distribution de produits ou de services comprennent une ou plusieurs plates-formes, appelées aussi têtes de réseau, qui sont essentiellement des systèmes informatiques, PC ou gros ordinateurs, chargés d'élaborer, sur ordre de l'opérateur gestionnaire, des messages qui sont transmis, via un dispositif émetteur, aux divers appareils connectés au réseau considéré.

Ces messages peuvent comporter des informations relatives par exemple à l'autorisation pour l'utilisateur de l'appareil destinataire d'accéder à tel ou tel produit ou service comme un service de paiement, une communication téléphonique, l'accès à des fonctions informatiques (messagerie ou téléchargement d'un logiciel) ou à des programmes de télévision cryptée. A l'inverse, lesdites plates-formes peuvent également composer des messages de suppression de droits d'accès préalablement accordés, ou encore de modifier ces droits, notamment par leur extension à de nouveaux produits ou services proposés par le réseau à ses abonnés.

Les messages émis par les plates-formes sont captés par les récepteurs des appareils puis transmis à un module de sécurité présent dans chaque appareil et dont le but est de contrôler l'accès par l'appareil correspondant aux produits ou services distribués par le réseau. WO 95/20280 décrit un procédé d'émission et de réception de programmes à accès conditionnel gérés par un même opérateur.

Les modules de sécurité, qui seront appelés modules de contrôle d'accès dans la suite de ce mémoire, peuvent être détachables, comme une carte à mémoire électronique ou similaire, ou non-détachables de l'appareil comme un composant de sécurité.

On comprendra que les messages provenant des plates-formes doivent absolument être sécurisés du fait même qu'ils permettent de créer, de modifier ou de supprimer des droits d'accès des appareils aux divers produits ou services du réseau.

A cet effet, on a recours à des systèmes de diversification qui ont pour objet d'empêcher, par exemple, qu'un message d'autorisation d'accès préalablement enregistré ne soit retransmis à l'appareil par un émetteur pirate après que l'accès ait été supprimé. De même, il y a lieu d'éviter tout détournement vers un appareil d'un message destiné à un autre appareil.

Un système de diversification connu consiste à inclure dans les messages élaborés par les plates-formes une donnée de diversification, propre à chaque message, qui, mélangée à une clé secrète propre à chaque plate-forme à l'aide d'un algorithme de cryptage, permet d'établir un certificat, ou signature, du message. Notons que pour éviter le détournement vers un appareil d'un message destiné à un autre appareil, il suffit pour composer le certificat d'utiliser non pas la clé secrète de la plate-forme mais une clé secrète diversifiée résultant du mélange par un autre algorithme de cryptage de la clé secrète de la plate-forme et d'un numéro d'identification du module de contrôle d'accès destinataire.

Le module de contrôle d'accès de l'appareil destinataire du message connaissant également la clé secrète de la plate-forme ainsi que l'algorithme de cryptage, peut à son tour reconstituer le certificat et le comparer à celui qui a été émis. Si la comparaison est positive, on en conclut que l'émetteur qui a transmis le message possède bien la clé secrète et que le message n'a pas été modifié.

Comme dans ce système de diversification, la donnée de diversification doit être propre à chaque message, les plates-formes, lorsqu'elles sont multiples, doivent être synchronisées, soit en étant reliées à un générateur de données de diversification unique qui distribue sur demande des plates-formes les données de diversification, soit en ayant chacune son propre générateur avec compte-rendu aux autres générateurs à chaque message.

La donnée de diversification peut être un nombre aléatoire fourni par un générateur de nombres aléatoires. Dans ce cas, et pour éviter toute duplication de messages, les modules de contrôle d'accès doivent pouvoir stocker tous les nombres aléatoires des messages qu'ils reçoivent, ceci afin de pouvoir vérifier qu'un nombre aléatoire reçu ne l'a pas déjà été précédemment, ce qui signifierait que le message a déjà été reçu. Pour cela, il faudrait réserver dans le module de contrôle d'accès un espace très important. Par exemple, avec des nombres aléatoires de 4 octets par message, on atteint pour 1000 messages 4000 octects de réservation, soit la moitié de l'espace mémoire usuellement disponible dans les modules de contrôle d'accès.

Pour remédier à cet inconvénient, on a recours à une donnée de diversification constituée par le numéro d'ordre du message émis, généré par un compteur de messages qui s'incrémente d'une unité à chaque message émis par l'ensemble des plates-formes du réseau. II suffit alors pour les modules de contrôle d'accès de stocker le numéro du dernier message reçu et de vérifier que ce numéro est bien postérieur au précédent reçu.

Toutefois, ce système présente l'inconvénient qu'en cas d'arrêt non contrôlé, il faudrait relancer le compteur à partir du nombre 1, ce qui conduirait à rejeter tout nouveau message car considéré comme antérieur et donc déjà reçu. Dans cette hypothèse, un moyen de sauvegarde serait pour chaque module de contrôle d'accès de stocker les numéros de tous les messages reçus, mais se pose alors le problème du coût de la sauvegarde.

Aussi, un premier problème technique à résoudre par l'objet de la présente invention est de proposer un système de diversification d'informations transmises par un réseau vers des appareils délivrant des produits ou des services, ledit réseau comprenant une pluralité de plates-formes aptes, chacune, à élaborer des messages comportant une donnée de diversification des informations à transmettre, fournie par un générateur de données de diversification, et lesdits appareils comprenant, chacun, un module de contrôle d'accès, système qui permettrait d'éliminer les contraintes liées à la synchronisation des plates-formes entre elles.

La solution à ce premier problème technique consiste, selon la présente invention, en ce que chaque plate-forme dispose d'un générateur de données de diversification autonome, et en ce que ledit module de contrôle d'accès de chaque appareil comporte, d'une part, des moyens de stockage de la donnée de diversification transmise avec le dernier message fourni par chaque plate-forme, et, d'autre part, des moyens de comparaison de chaque nouvelle valeur de la donnée de diversification reçue de chaque plate-forme avec au moins la valeur précédente.

Ainsi, les modules de contrôle d'accès du réseau disposent d'autant de moyens de stockage que de plates-formes, chaque moyen de stockage étant affecté à un générateur de données de diversification d'une plate-forme.

I1 résulte de l'autonomie des générateurs de données de diversification que les plates-formes n'ont plus besoin d'être synchronisées, d'où une simplification extrême du réseau qui n'est pas remise en cause par l'augmentation limitée du nombre de moyens de stockage des modules de contrôle d'accès.

Un autre problème technique que se propose de résoudre également l'invention est de permettre aux plates-formes de redevenir fonctionnelles après une défaillance quelconque tout en conservant une sécurité maximum.

A cet effet, il est prévu, selon la présente invention, que ledit générateur de données de diversification est une base de temps universel, ladite donnée de diversification étant par exemple la date d'émission du message par rapport à une origine to arbitraire connue.

En cas de panne d'une plate-forme, l'origine tₒ n'étant pas perdue, le système pourra repartir à une date qui sera postérieure à la date du dernier message fournie par ladite plate-forme. Aucune disposition particulière de sauvegarde n'est donc à envisager.

Enfin, dans le but de réduire la taille des moyens de stockage des modules de contrôle d'accès, l'invention prévoit que ladite base de temps a une durée tₘₐₓ limitée à au moins la durée de vie desdits modules de contrôle d'accès. En d'autres termes, au lieu de dimensionner les moyens de stockage sur la durée de vie du réseau, 40 ans par exemple, on les dimensionne légèrement supérieurs à la durée de vie des modules, 10 ans par exemple.

Mais alors, se pose le problème des modules qui auront été mis en service peu de temps avant tₘₐₓ car, par hypothèse, ils ne pourront plus accepter de messages après cette date, la base de temps étant remise à zéro et les nouveaux messages présentant de ce fait une date apparente antérieure.

Pour résoudre cette difficulté, l'invention fournit un moyen de discrimination consistant en ce que chaque module de contrôle d'accès stocke en mémoire la date t₁ d'émission du premier message fourni par chaque plate-forme, et en ce que la validation d'un message émis à la date tₙ₊₁, s'effectue par comparaison avec la date t₁ et la date tₙ d'émission du message précédent :
- si tₙ>t ₁ le message à t_{n+ 1} est validé si t_{n + 1} n'est pas compris dans ]t₁, tₙ[,
- si tₙ< t₁ le message à tₙ₊₁ est validé si tₙ₊₁ est compris dans ]tₙ, t₁[

De cette manière, les modules de contrôle d'accès pourront être utilisés pendant toute la durée tₘₐₓ quelle que soit la date de leur mise en service.

La description qui va suivre en regard des dessins annexés, donnés à titre d'exemples non limitatifs, fera bien comprendre en quoi consiste l'invention et comment elle peut être réalisée.
La figure 1 est une vue schématique d'un réseau de distribution de produits ou de services muni d'un système de diversification d'informations conforme à l'invention.
La figure 2 est un schéma représentant la constitution d'un message fourni par les plates-formes du réseau de la figure 1.
La figure 3 est un schéma donnant la structure des modules de contrôle d'accès des appareils du réseau de la figure 1.
La figure 4 est un chronogramme d'une base de temps utilisée comme générateur de données de diversification des plates-formes de la figure 1.

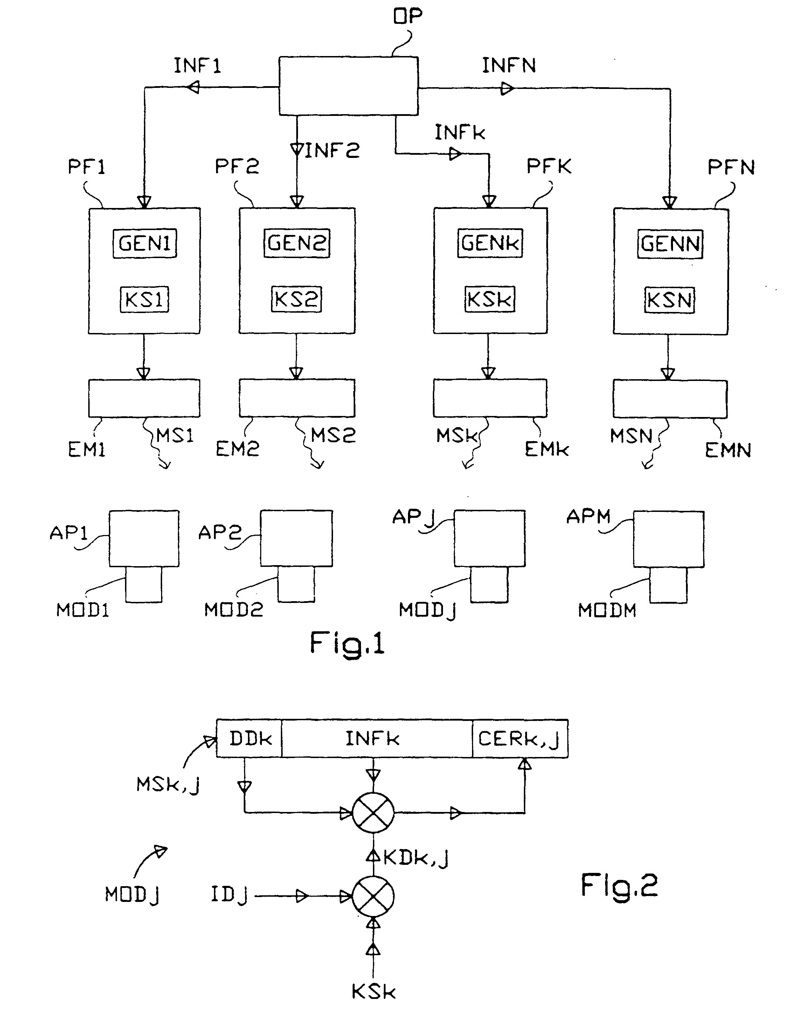

La vue schématique de la figure 1 montre un réseau de distribution de produits ou de services comportant une pluralité de N plates-formes PF1 , PF2,..., PFk, ..., PFN aptes à élaborer, sur instructions de l'opérateur OP du réseau, des messages, MS1 MS2, ... MSk, .. MSN à destination d'une pluralité de M appareils AP1, AP2, .... APj, ..., APM abonnés au réseau, tels que des téléphones mobiles par exemple. Lesdits messages MSk sont transmis aux divers appareils par des dispositifs émetteurs EM1, EM2, ..., EMk, EMN associées à chaque plate-forme.

Les messages MSk sont reçus par les appareils APj et transmis aux modules MODj de contrôle d'accès équipant respectivement lesdits appareils. Les modules de contrôle d'accès sont chargés d'authentifier et de valider les messages reçus avant prise en compte des informations qu'ils contiennent, comme des autorisations d'accès ou encore des modifications ou suppressions de droits d'accès accordés.

La figure 2 montre comment est typiquement constitué un message MSk destiné à un appareil APj. Ce message, que l'on notera ici MSk,j comprend les informations INFk proprement dites à transmettre à l'appareil APj. Il comprend également une donnée DDk de diversification fournie par un générateur GENk de données de diversification autonome, propre à la plate-forme PFk. Ladite plate-forme PFk est affectée d'une clé secrète KSk qui lui est également propre. A chaque module MODj de contrôle d'accès est attribué un code IDj d'identification, et l'ensemble de tous les codes d'identification est connu de chaque plate-forme. Ainsi, lorsqu'une plate-forme PFk doit fournir un message MSk,j à l'appareil APj, une clé secrète diversifiée KDk, j est constituée à partir de la clé secrète KSk, des informations INFk, du code IDj d'identification et d'un algorithme de cryptage qui peut être du type DES ou plus simplement un OU exclusif. La clé secrète diversifiée KDkj est mélangée à la donnée DDk de diversification à l'aide d'un autre algorithme de cryptage, DES par exemple, pour constituer un certificat CERk,j.

Ce système de diversification permet, du fait de la diversification de la clé secrète par rapport au module MODj destinataire, d'éviter qu'un message adressé à un appareil soit utilisé pour un autre.

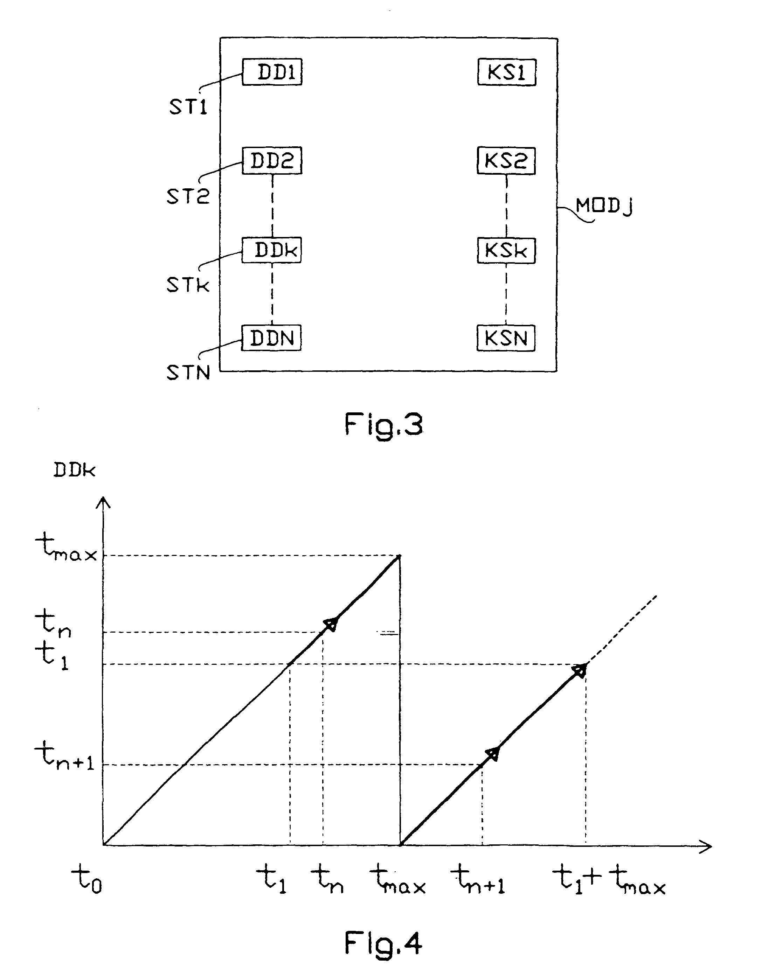

A la réception, le module MODj de l'appareil APj qui, comme on peut le voir sur la figure 3, a stocké dans une mémoire les clés secrètes KSk de chaque plate-forme PFk, peut à son tour calculer un certificat de la même manière que la plate-forme PFk et vérifier l'authenticité du message MSk,j en comparant le certificat ainsi calculé au certificat CERk,j figurant dans ledit message.

De façon à supprimer toute synchronisation entre les plates-formes PFk, destinée à éviter que des plates-formes différentes envoient des message MSk ayant la même donnée DDk de diversification, les modules MODj de contrôle d'accès comportent, ainsi que le montre la figure 3, des moyens STk de stockage de la valeur de la donnée DDk de diversification transmise avec le dernier message MSk fourni par chaque plate-forme PFk. Comme les données de diversification sont stockées séparément pour chaque plate-forme, il n'y a plus de danger de collision et donc plus lieu de synchroniser les plates-formes entre elles, celles-ci deviennent alors autonomes : de plus, chaque module MODk est muni de moyens de comparaison de chaque nouvelle valeur de la donnée DDk de diversification reçue de chaque plate-forme PFk avec au moins la valeur précédente, ceci afin d'éviter qu'un message déjà envoyé, d'autorisation d'accès notamment, ne soit stocké et envoyé à nouveau à l'appareil de manière frauduleuse après suppression de l'accès par l'opérateur OP.

Les données DDk de diversification peuvent étre, comme mentionné plus haut, des nombres aléatoires fournis par un générateur GENk de nombres aléatoires. Toutefois, il faudrait stocker dans les modules de contrôle d'accès tous les nombres aléatoires reçus par chaque plate-forme, ceci afin d'éviter toute répétition.

Dans ce cas, tout nouveau nombre aléatoire reçu est comparé à tous ceux déjà reçus de la même plate-forme.

On peut aussi choisir pour donnée DDk de diversification le numéro d'ordre des messages reçus de chaque plate-forme PFk, lequel s'incrémente d'une unité à chaque nouveau message. Le générateur GENk de données de diversification est alors un simple compteur. Dans chaque module MODj, les moyens STk de stockage enregistrent le numéro DDk du dernier message émis par la plate-forme PFk. Au message suivant provenant de la même plate-forme PFk, le module de contrôle d'accès vérifiera que le numéro DDk+1 du nouveau message est bien postérieur à DDk, auquel cas le message pourra être validé. ce système de diversification a l'avantage de n'avoir à stocker qu'une seule donnée dans lesdits moyens de stockage.

L'invention propose également un autre type de générateur de données de diversification dont le principe est illustré sur la figure 4.

Il s'agit d'un générateur constitué par une base de temps universel pour lequel la donnée DDk de diversification est la date tₖ d'émission du message, cette date pouvant être prise par rapport à une origine tₒ arbitraire connue. En cas d'arrêt non contrôlé d'une plate-forme, celle-ci pourra repartir de manière automatiquement opérationnelle puisque to n'est pas perdu. Il n'y a donc aucune mesure de sauvegarde particulière à prévoir.

Afin de limiter la taille des moyens STk de stockage, on peut, au lieu de donner à la base de temps une durée tₘₐₓ égale à la durée de vie du réseau, 40 ans par exemple, la limiter à une durée légèrement supérieure à la durée de vie moyenne des modules MODj de contrôle d'accès. Dans cette hypothèse, la donnée DDk de diversification de la plate-forme PFk repasse à zéro après avoir atteint tₘₐₓ.

On comprend alors que, sans précaution particulière, les modules de contrôle d'accès devront rejeter tous les messages reçus après la date tₘₐₓ car ayant une donnée DDk de diversification apparemment antérieure à la précédente, et ceci quelle que soit la date t₁ de mise en service du module. Cela signifie que des modules qui auraient été fabriqués et stockés bien après la date tₒ auraient une durée de vie opérationnelle considérablement raccourcie.

C'est pourquoi, il est prévu des moyens de discrimination permettant d'éviter cet inconvénient. Ces moyens consistant en ce que chaque module MODj stocké en mémoire la date t₁ d'émission du premier message MS1 fourni par chaque plate-forme, la validation d'un message émis à la date tₙ₊₁ s'effectuant par comparaison avec la date t₁ et la date tₙ d'émission de message précédent de la manière suivante :
- si tₙ > t₁ le message à t_{n + 1} est validé si t_{n + 1} n'est pas compris dans ]t₁, tₙ[
- si tₙ < t₁ le message à t_{n + 1} est validé si tₙ₊₁ est compris dans ]tₙ, t₁[

Comme l'indique la figure 4, on peut ainsi prolonger la durée de vie des modules au-delà de tₘₐₓ jusqu'à tₘₐₓ + t₁ soit une durée totale de fonctionnement de tₘₐₓ.

## Revendications

1. Système de diversification d'informations (INFk) transmises par un réseau vers des appareils (APPj) délivrant des produits ou des services, ledit réseau comprenant une pluralité de plates-formes (PFk) aptes, chacune, à élaborer des messages (MSk) comportant une donnée (DDk) de diversification des informations (INFk) à transmettre, fournie par un générateur (GENk) de données de diversification, et lesdits appareils (APPj) comprenant, chacun, un module (MODj) de contrôle d'accès, **caractérisé en ce que** chaque plate-forme (PFk) dispose d'un générateur (GENk) de données de diversification autonome, et **en ce que** ledit module (MODj) de contrôle d'accès de chaque appareil (APj) comporte, d'une part, des moyens (STk) de stockage de la valeur de la donnée (DDk) de diversification transmise avec le dernier message (MSk) fourni par chaque plate-forme (PFk), et, d'autre part, des moyens de comparaison de chaque nouvelle valeur de la donnée (DDk+1) de diversification reçue de chaque plate-forme (PFk) avec au moins la valeur précédente (DDk).

2. Système de diversification selon la revendication 1, **caractérisé en ce que** ledit générateur (GENk) de données de diversification est un générateur de nombres aléatoires.

3. Système de diversification selon la revendication 1, **caractérisé en ce que** ledit générateur (GENk) de données de diversification est un compteur de messages.

4. Système de diversification selon la revendication 1, **caractérisé en ce que** ledit générateur (GENk) de données de diversification est une base de temps universel.

5. Système de diversification selon la revendication 4, **caractérisé en ce que** la donnée (DDK) de diversification est la date tₙ d'émission du message (MSk) par rapport à une origine tₒ arbitraire connue.

6. Système de diversification selon l'une des revendications 4 ou 5, **caractérisé en ce que** ladite base de temps a une durée tₘₐₓ limitée à au moins la durée de vie desdits modules (MODj) de contrôle d'accès.

7. Système de diversification selon la revendication 6, **caractérisé en ce que** chaque module (MODj) de contrôle d'accès stocke en mémoire la date t₁ d'émission du premier message (MS1) fourni par chaque plate-forme (PFk), et **en ce que** la validation d'un message (MSk+1) émis à la date t_{n +1} s'effectue par comparaison avec la date t₁et la date tₙ d'émission du message précédent (MSk) :
- si tₙ > t₁ le message à t_{n + 1} est validé si t_{n + 1} n'est pas compris dans ]t₁, tₙ[
- si tₙ < t₁ le message à t_{n + 1} est validé si t_{n + 1} est compris dans ]tₙ, t₁[

## Patentansprüche

1. System zur Diversifizierung von Informationen (INFk), die von einem Netz an Apparate (APPj) übertragen werden, welche Produkte abgeben oder Dienstleistungen erbringen, wobei dieses Netz eine Vielzahl von Plattformen (PFk) umfasst, die jeweils Nachrichten (MSk) erstellen können, die von einem Diversifizierungsdatengenerator (GENk) bereitgestellte Diversifizierungsdaten (DDk) der zu übertragenden Informationen (INFk) enthalten und diese Apparate (APPj) jeweils ein Zugangskontrollmodul (MODj) umfassen, **dadurch gekennzeichnet, dass** jede Plattform (PFk) über einen unabhängigen Diversifizierungsdatengenerator (GENk) verfügt und dass dieses Zugangskontrollmodul (MODj) jedes Apparates (APj) zum einen Mittel (STk) zum Speichern des Wertes der Diversifizierungsdaten (DDk), die mit der letzten von jeder Plattform (PFk) bereitgestellten Nachricht (MSk) übertragen werden, umfasst und zum anderen Mittel zum Vergleichen jedes neuen, von jeder Plattform (PFk) erhaltenen Wertes der Diversifizierungsdaten (DDk+1) mit mindestens dem vorausgehenden Wert (DDk) umfasst.

2. Diversifizierungssystem nach Anspruch 1, **dadurch gekennzeichnet, dass** besagter Diversifizierungsdatengenerator (GENk) Zufallszahlen erzeugt.

3. Diversifizierungssystem nach Anspruch 1, **dadurch gekennzeichnet, dass** besagter Diversifizierungsdatengenerator (GENk) ein Nachrichtenzähler ist.

4. Diversifizierungssystem nach Anspruch 1, **dadurch gekennzeichnet, dass** besagter Diversifizierungsdatengenerator (GENk) eine Universalzeitbasis ist.

5. Diversifizierungssystem nach Anspruch 4, **dadurch gekennzeichnet, dass** die Diversifizierungsdaten (DDK) dem Sendedatum tₙ der Nachricht (MSk) in Bezug auf einen bekannten willkürlichen Nullpunkt tₒ entsprechen.

6. Diversifizierungssystem nach einem der Ansprüche 4 oder 5, **dadurch gekennzeichnet, dass** besagte Zeitbasis eine auf mindestens die Lebensdauer der besagten Zugangskontrollmodule (MODj) beschränkte Dauer tₘₐₓ aufweist.

7. Diversifizierungssystem nach Anspruch 6, **dadurch gekennzeichnet, dass** jedes Zugangskontrollmodul (MODj) im Speicher das Sendedatum t₁ der ersten, von jeder Plattform (PFk) bereitgestellten Nachricht (MS1) speichert und dass die Validierung einer zum Zeitpunkt t_{n + 1} gesendeten Nachricht (MSk+1) durch Vergleich mit dem Sendedatum t₁ und dem Sendedatum tₙ der vorausgehenden Nachricht (MSk) erfolgt:
- wenn tₙ > t₁, wird die Nachricht bei t_{n + 1} validiert, wenn t_{n + 1} nicht in ]t₁, tₙ[ enthalten ist,
- wenn tₙ < t₁, wird die Nachricht bei t_{n + 1} validiert, wenn t_{n + 1} in ]tₙ, t₁[ enthalten ist.

## Claims

1. System for the diversification of information (INFk) transmitted by a network to devices (APPj) supplying products or services, said network comprising a number of platforms (PFk) each able to create messages (MSk) including a data item (DDk) for the diversification of information (INFk) to be transmitted, supplied by a data diversification generator (GENk), and said devices (APPj) each comprising an access control module (MODj), **characterised in that** each platform (PFk) has an independent diversification data generator (GENk), and **in that** said access control module (MODj) of each device (APj) includes, firstly, means (STk) to store the value of the diversification data (DDk) transmitted with the last message (MSk) supplied by each platform (PFk) and, secondly, means to compare each new value of the diversification data (DDk+1) received from each platform (PFk) with at least the previous value (DDk).

2. System for diversification according to claim 1, **characterised in that** said data diversification generator (GENk) is a random number generator.

3. System for diversification according to claim 1, **characterised in that** said data diversification generator (GENk) is a message counter.

4. System for diversification according to claim 1, **characterised in that** said data diversification generator (GENk) is a universal time base.

5. System for diversification according to claim 4, **characterised in that** the diversification data (DDK) is the date tₙ of transmission of the message (MSk) with respect to a known random origin to.

6. System for diversification according to claim 4 or 5, **characterised in that** said time base has a duration tₘₐₓ limited to at least the lifetime of said access control modules (MODj).

7. System for diversification according to claim 6, **characterised in that** each access control module (MODj) stores in memory the date t₁ of transmission of the first message (MSI) supplied by each platform (PFk), and **in that** the validation of a message (MSk+1) transmitted on date t_{n +1} is carried out by comparison with the date t₁ and the date tₙ of transmission of the previous message (MSk):
- if tₙ > t₁ the message at t_{n + 1} is validated if t_{n + 1} is not within the range ]t₁, tₙ[
- if tₙ < t₁ the message at t_{n + 1} is validated if t_{n + 1} is within the range ]tₙ, t₁ [
